# EUROPEAN PATENT APPLICATION

(11) **EP 2 020 542 A1**
(43) Date of publication of application: **04.02.2009**
(21) Application number: 08161286.3
(22) Date of filing: 28.07.2008
(51) Int. Cl.: F16J 15/44, F01D 11/04

(54) **Seal assembly**

(30) Priority: 30.07.2007 US 830236; 11.07.2008 US 171418
(71) Applicant: GENERAL ELECTRIC COMPANY, Schenectady, NY 12345 (US)
(72) Inventor: Varanasi, Kripa, Clifton Park, 12065 (US); Albers, Joseph, Fort Wright, KY 41011 (US); Herron, William Lee, Springdale, OH 45246 (US); Crudgington, Peter, Freshford, Bath and South East Somerset (GB); Khandeparker, Mahesh, 560066, Karnataka (IN); Ippili, Sai Raju, 560066, Karnataka (IN); Anga, Prathap, Karnataka (IN)
(74) Representative: Illingworth-Law, William Illingworth

(57) **Abstract**

A seal assembly (100) comprising a first movable stator member (110) movable between a sealing position and a non-sealing position, a second fixed stator member (102), the first stator member (110) being movable relative to the second stator member (102), the seal assembly (100) further comprising at least one flexure member (150) coupled to the second stator member (102), and at least one biasing member (151) coupled between the at least one flexure (150) and the movable stator (110) for biasing the movable stator (110) to a non-sealing position.

## Description

### FIELD OF THE INVENTION

The invention generally relates to gas turbine engines and more specifically to seal assemblies used with gas turbine engines.

### BACKGROUND OF THE INVENTION

Gas turbine engines displace large volumes of pressurized fluid, such as air through the engine fluid flowpath, during operation. Seal assemblies prevent the fluid from leaking undesirably by restricting fluid flow from areas of higher pressure to areas of lower pressure. The seal assemblies may be positioned between engine stationary and rotating members. The seals compensate for transient variations in the gaps between adjacent engine component parts.

Because of the working environment of the seal assemblies, and/or the operating environment, at least some known seal assemblies may deteriorate over time. If the seals do not provide the required seal, fluid will leak past the seal detrimentally affecting the operation of the engine. Fluid leakage through gas turbine engine seal assemblies may significantly increase fuel consumption and adversely affect engine efficiency. Additionally, fluid leakage may cause damage to other engine components and increase overall engine maintenance costs.

To facilitate sealing gaps defined between regions of high and low pressure at least some known seal assemblies, such as the seal assembly described in U.S. Patent No. 5,284,347, for example, use aspirating air to control leakage. The aspirating air prevents the rotating member from contacting the stationary member to facilitate accommodating transient variations in the gap defined between the rotating and stationary members with little or no deterioration of the seal over the life of the seal assembly. However, because of the number of discrete components comprising such a seal assembly, such seal assemblies may be complex to install in the engine, and the weight of such assemblies will increase engine weight which has a direct negative impact on engine performance. Moreover, because of the number of seal assembly components, the operating efficiency of such seal assemblies may be contingent on the tolerances between the rotating and stationary members.

There is a need to develop a seal assembly that has relatively few parts, effectively prevents leakage of fluid within a turbine engine and does not deteriorate over time.

### BRIEF DESCRIPTION OF THE INVENTION

A seal assembly comprising a first movable stator member movable between a sealing position and a non-sealing position, a second fixed stator member, the first stator member being movable relative to the second stator member, the seal assembly further comprising at least one flexure member coupled to the second stator member, and at least one biasing member coupled between the at least one flexure and the movable stator for biasing the movable stator to a non-sealing position.

### BRIEF DESCRIPTION OF THE DRAWINGS

While the specification concludes with claims particularly pointing out and distinctly claiming the invention, it is believed that the embodiments set forth herein will be better understood from the following description provided by way of example only in conjunction with the accompanying figures, in which like reference numerals identify like elements, and in which:

Figure 1 is a schematic illustration of an exemplary gas turbine engine;

Figure 2 is a cross-sectional view of an exemplary seal assembly that may be used with the gas turbine engine shown in Figure 1, with a movable sealing member in a first position;

Figure 3 is a cross-sectional view of the exemplary seal assembly of Figure 2 with the movable sealing member in a second sealing position;

Figure 4 is a cross-sectional view of an exemplary seal assembly that may be used with the gas turbine engine shown in Figure 1, with a movable sealing member in a first open position;

Figure 5 is a cross-sectional view of the exemplary seal assembly of Figure 4 with the movable sealing member in a second sealing position;

Figure 6 is a front view of a flexure member useful with the seal assembly;

Figure 7 is an alternate embodiment flexure member useful with the seal assembly;

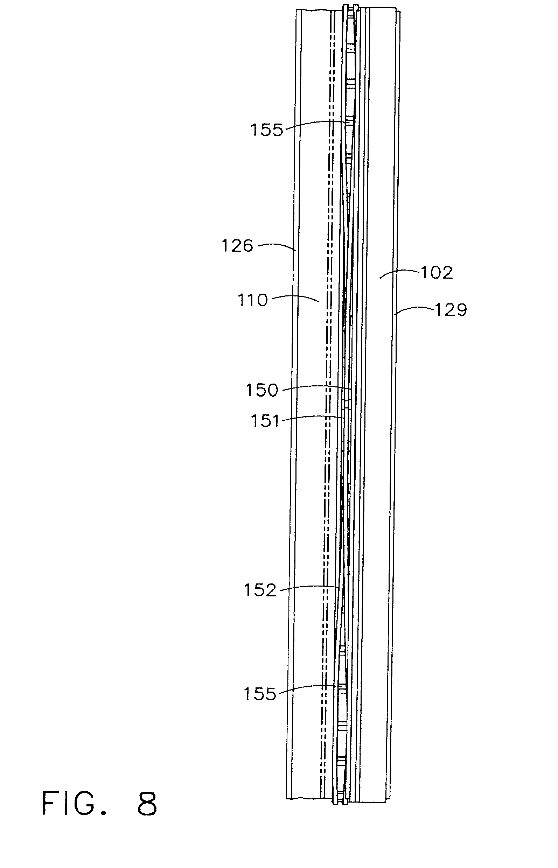

Figure 8 is a side view of the exemplary seal of Figure 2, in a first position;

Figure 9 is an isometric view of the exemplary seal of Figure 2, in the first position;

Figure 10 is an isometric view of the seal of Figure 2 in the second sealing position, similar to the cross-sectional view shown in Figure 3;

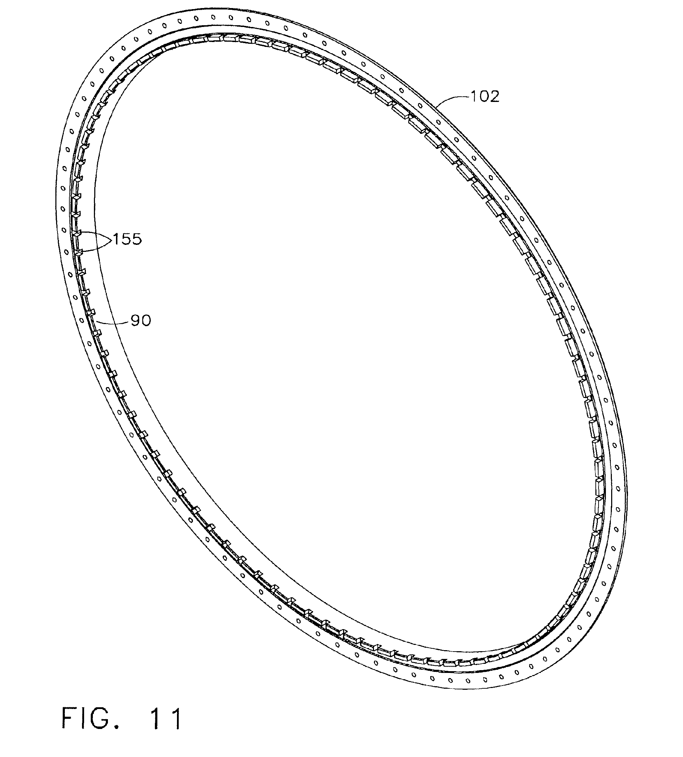

Figure 11 is an isometric view of the second stator member (102 of Figure 2);

Figure 12 is an illustration of a possible alternate flexure member;

Figure 13 is a front partial view of another embodiment of a flexure member, similar to that of Figure 6, useful with the seal assembly;

Figures 14 and 15 are enlarged partial views of the flexure member of Figure 13;

Figure 16 is a front partial view of another embodiment of a flexure member, similar to that of Figure 6, useful with the seal assembly;

Figures 17 and 18 are enlarged partial views of the flexure member of Figure 16;

Figure 19 is a front partial view of another embodiment of a flexure member, similar to that of Figure 6, useful with the seal assembly; and

Figure 20 is an enlarged partial view of the flexure member of Figure 19.

### DETAILED DESCRIPTION OF THE SPECIFICATION

Although the invention is herein described and illustrated in association with a compressor to turbine interface for a gas turbine engine, it should be understood that the present invention may be used to facilitate controlling leakage of any fluid between any region of generally high pressure and any region of lower pressure.

Herein, the present invention seal assembly provides a simplified seal with a reduced part count relative to prior art seals thereby simplifying the seal assembly, and reducing the weight of the seal assembly. For example, spring assemblies used in related seal assemblies have been replaced by one or more flexure members. As will be described herein the flexure member is attached between a non-contact seal slide and a stator. Also, secondary seal assemblies of prior art sealing devices have been replaced with a single piston ring seal. The single ring seal may be retained within either a fixed or sliding stators. The design may incorporate one or more flexure members, the number thereof depending upon the design requirement.

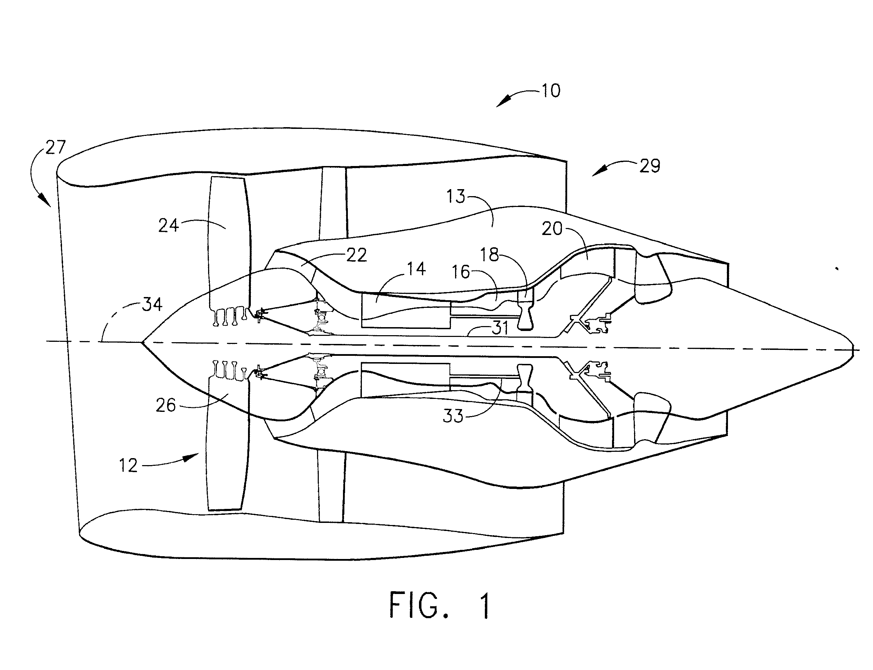

Figure 1 is a schematic illustration of an exemplary gas turbine engine 10 including a fan assembly 12 and a core engine 13 including a high pressure compressor 14, and a combustor 16. Engine 10 also includes a high pressure turbine 18, a low pressure turbine 20, and a booster 22. Fan assembly 12 includes an array of fan blades 24 extending radially outward from a rotor disc 26. Engine 10 has an intake side 27 and an exhaust side 29. In one embodiment, the gas turbine engine is a GE90-115B that is available from General Electric Company, Cincinnati, Ohio. Fan assembly 12 and turbine 20 are coupled by a first rotor shaft 31, and compressor 14 and turbine 18 are coupled by a second rotor shaft 33.

During operation, air flows axially through fan assembly 12, in a direction that is substantially parallel to a central axis 34 extending through engine 10, and compressed air is supplied to high pressure compressor 14. The highly compressed air is delivered to combustor 16. Airflow (not shown in Figure 1) from combustor 16 drives turbines 18 and 20, and turbine 20 drives fan assembly 12 by way of shaft 31.

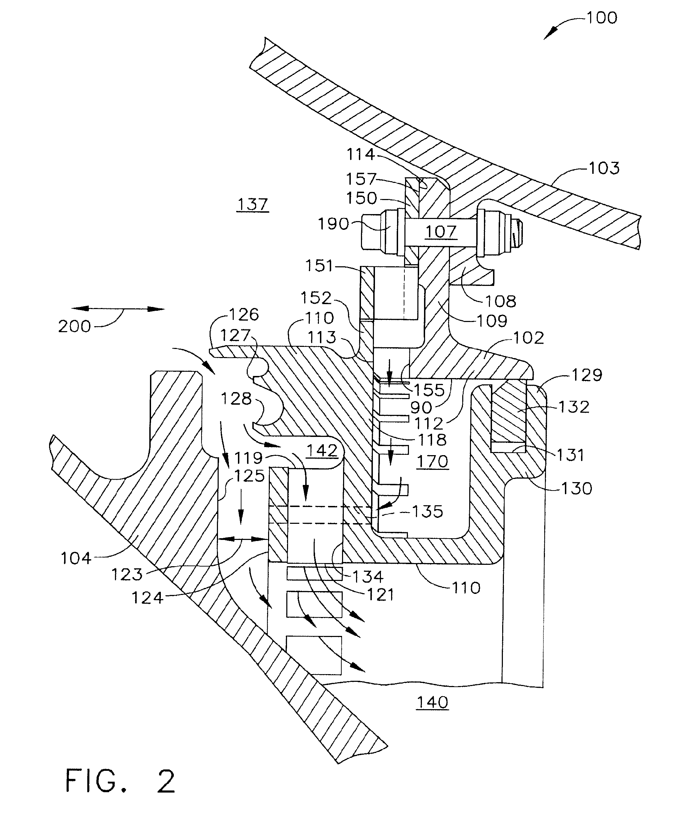

Figure 2 is a cross-sectional view of an exemplary seal assembly 100 that may be used within gas turbine engine 10. In the exemplary embodiment, gas turbine engine 10 includes stationary stator member 102 coupled to frame 103 and a rotating member 104. In one embodiment, rotating member 104 is a rotor that is rotatably coupled within engine 10 to rotate about the axis of rotation 34. Frame 103 is a stationary circumferential member positioned around an axis of rotation 34 (not shown in Figure 2). Frame member 103 includes an attachment flange 108 that extends outwardly away from the frame. In one embodiment, frame 103 may be comprised of the casing of gas turbine engine 10. As air flows through engine 10, frame 103 is configured to help contain flowpath air.

Stationary stator member 102 of seal assembly 100 is a stationary member that extends circumferentially around the axis of rotation 34 of gas turbine engine 10. The stator is comprised of a base 112 and a flange member 109. The base includes a base sealing surface 90 and a stop surface 113. The flange and base are perpendicular. As shown in Figure 2, stationary stator member 102 is fixed to frame 103 by fastener 107. The fastener may be comprised of a conventional bolt member or other suitable fastening means. The stator flange 109 and frame flange 108 are coupled by the fastener member 107. A flexure member 150, which will be disclosed in greater detail below is sandwiched between the head 190 of fastener 107 and a surface 114 of flange 109 of fixed stator 102.

Seal assembly 100 also is comprised of moveable stator member 110 includes a sealing face 124 and a plurality of sealing teeth 127, 128 that extend outward from a portion of the sealing face 124. The stator 110 is movable axially, in direction generally represented by direction arrow 200 in Figure 2. In the exemplary embodiment, sealing face 124 is substantially parallel to a rotating member surface 125 of rotating member 104. In a first position shown in Figure 2, the sealing face 124 is located at a distance 123 away from rotating member 104. The movable stator 110 of seal assembly 100 is located in the first position when the turbine engine is not in use with no fluid flowing through the engine flowpath.

Moveable stator member 110 also includes an opening 135 defined therein. The opening extends in the axial direction 200 when the movable stator is correctly coupled with flange 108. As shown in Figure 2, the opening extends through the movable stator surfaces 124 and contact surface 118. When the movable stator is in the first, retracted position, surfaces 118 and 113 are in contact. This contact between movable stator 110 and flange 108 controls the displacement of the stator 110 to the first position.

In the exemplary embodiment, openings 135 are oriented substantially perpendicular to rotating member surface 125. As described below in more detail, openings 135 help to prevent contact between the movable member 110, and specifically the plurality of teeth 127, 128; and rotating member 104. The movable stator may include any number of openings 135 but for purposes of disclosing the exemplary embodiment, one or more openings 135 may be included in movable stator 110. Moveable stator member 110 further includes at least one radially extending opening 134. For purposes of disclosing the exemplary embodiment, a plurality of openings 134 are illustrated. However, any suitable number of radial openings 134 may be provided in stator 110. The opening 134 extends through surfaces 119 and 121 of the moveable stator member 110. In the exemplary embodiment, each opening 135 is located adjacent openings 134.

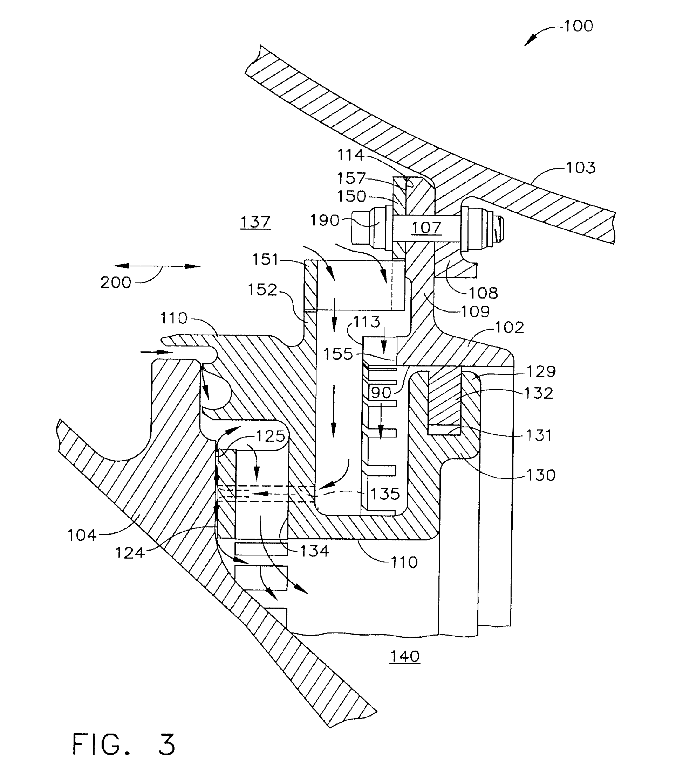

Moveable stator member 110 also includes yoke 130. The yoke extends radially and defines an opening 131 that receives a seal member 132. The seal member may be made from any suitable sealing material. As shown in Figures 2 and 3, when seated in opening 131, a portion of the seal member extends beyond the free end 129 of the yoke. When the movable and fixed stators are coupled as shown in the figures, the end of the seal that extends beyond free end 129 is in sealing contact with contact surface 90 of the fixed stator 102. The seal member may be a piston ring seal, for example. Note that in an alternate embodiment, the seal may be supported by stator 102 and engage a sealing surface along the movable member.

Figure 3 shows the moveable stator member 110 in a second position, also referred to herein as a sealing position. When air is supplied to the gas turbine flowpath, the pressure of the air causes the movable stator to be displaced in direction 200. As the stator member is displaced, seal 132 remains in contact with sealing surface 90. As the moveable stator moves toward member 104, the magnitude of distance 123 is reduced from its maximum value when the movable stator member is in the first position shown in Figure 2. As shown in Figure 3, when the movable stator reaches the end of travel and is in the second position, the sealing face 124 and the rotating member surface 125 are proximate each other.

Seal assembly 100 also comprises at least one flexure member 150. The flexure member is substantially flat. As assembled, one end of flexure member is located proximate the flange member 109. This end is identified as 157 in Figures 2 and 3. Ends 157 and 152 are joined by biasing member 151. Member 151 is extendible from its retracted length shown in Figure 2 to an extended length as shown in the sealing position of Figure 3.

The flexure member 150 comprises a weak spring which flexes out of plane to allow axial translation of the moveable stator member 110 relative to the stationary stator member 102. The connection of the flexure member 150 to the moveable stator member 110 is shown in these figures for simplicity as being bolted to the frame 103, but integral with the moveable stator 110. It could alternatively be a separate piece, but such a configuration may increase weight, complexity, and part count.

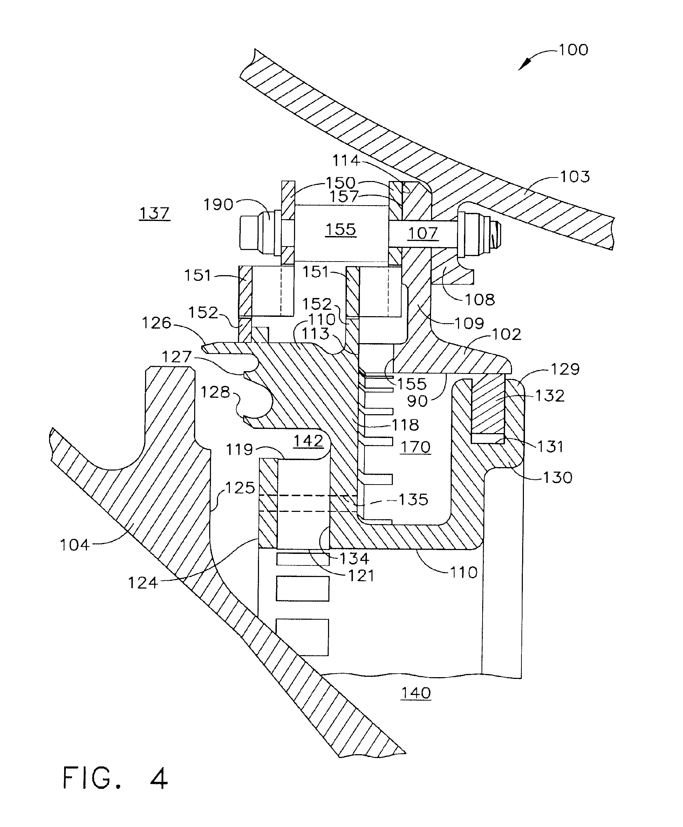

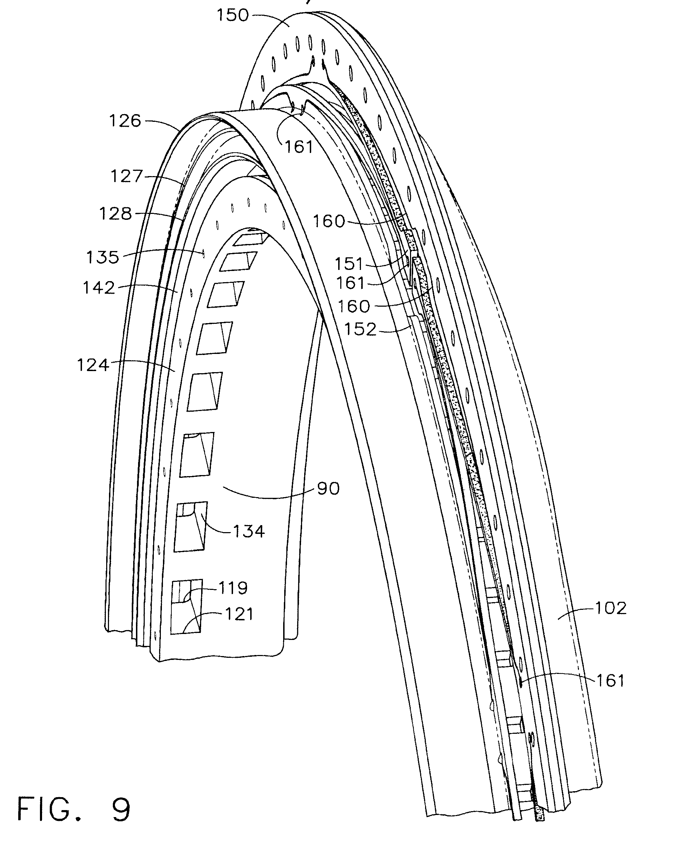

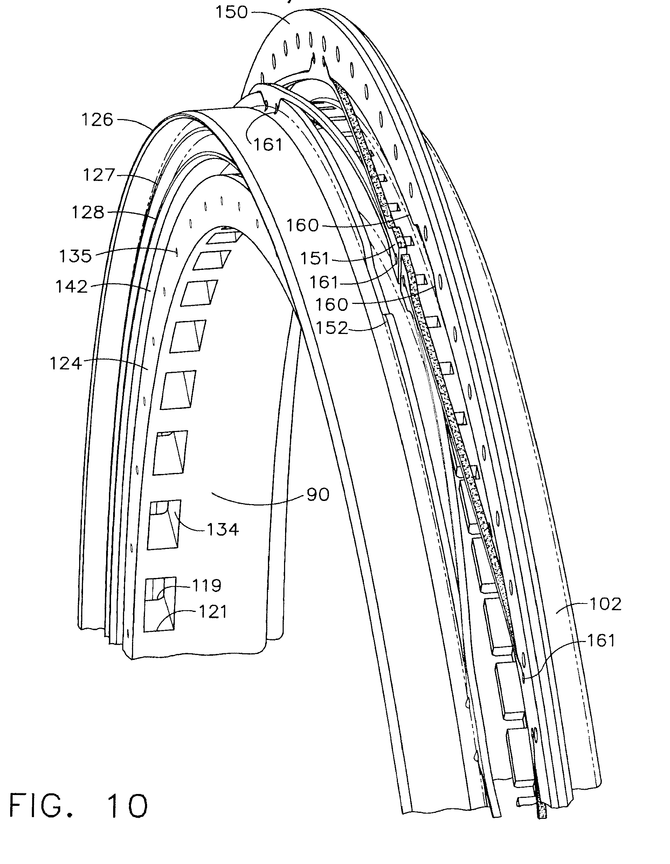

Figures 9 and 10 show in isometric view (comparable to the views of Figures 3 and 4) the bending of the flexure member (150 series of numbers). The flexure member is fixed to stationary stator 108 by bolt connection 107. The flexure member also includes a biasing portion 151 that is made integral with the movable stator member 110 at flange 152. The flexure member 150 may be integral with moveable stator member 110 and thereby cast with that member 110.

The flexure member 150 serves as a biasing mechanism for moving the moveable stator member 110. The member 150 biases the movable stator member toward the first position of Figure 2. The flexure member 150 returns the movable member to the first non-sealing position when the air flow through the engine is reduced to a minimum level or the engine is shut off. The flexure member 150 also controls the translation of movable member 110 to account for relative axial motion between the rotor 104 and the stator 103 during engine operation. A flexure member 150 may be preloaded against a stop (surface 113) such that in an un-pressurized state the sealing face 124 is held in an open position, e.g., when the turbine engine 10 has been disengaged into the off position. This condition prevents slide contact of the moveable stator member 110 with the rotor 104 at low or no activation pressures, such contact, when unintended, operating to damage the seal assembly 100 and thus hinder its performance.

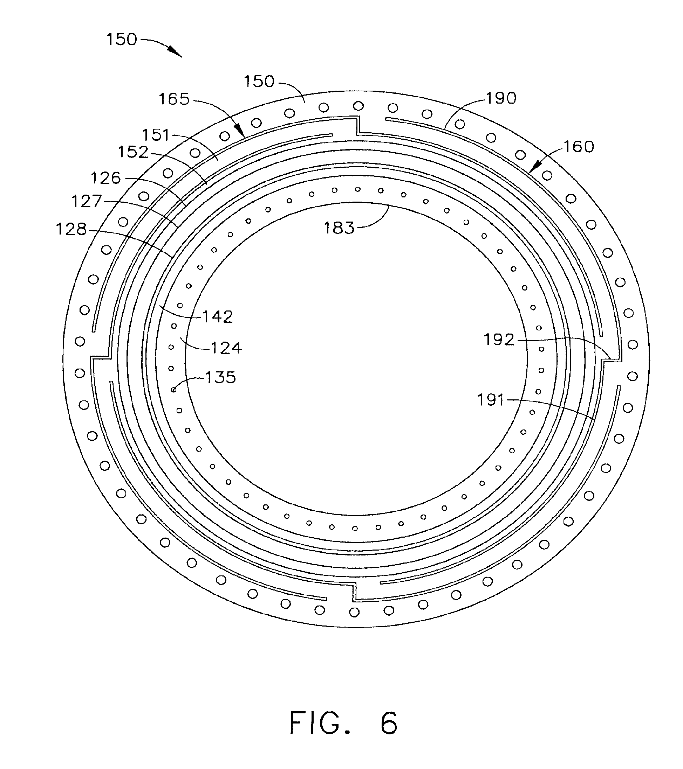

Figure 6 provides an exemplary flexure member 150. Flexure member 150 may be made from one or more of known metals in the art including steel, titanium, iron and nickel. As shown, the flexure member 150 includes a central opening 183 that centers the moveable stator member 110 about the engine axis 34, and seams 160 which are openings that extend through the thickness of the flexure member 150 and define beams of material therebetween. The seams 160 permit the flexure member 150 to flex or displace in the desired manner, out of the plane of the Figure. Such movement of the flexure member 150 biases a moveable stator member 110 in the required direction for example to either open or close the seal assembly 100 as directed or required.

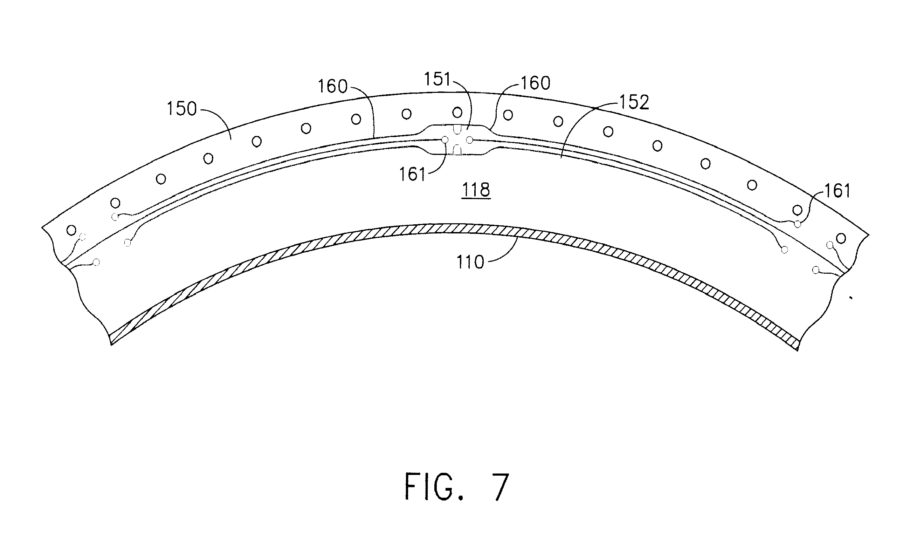

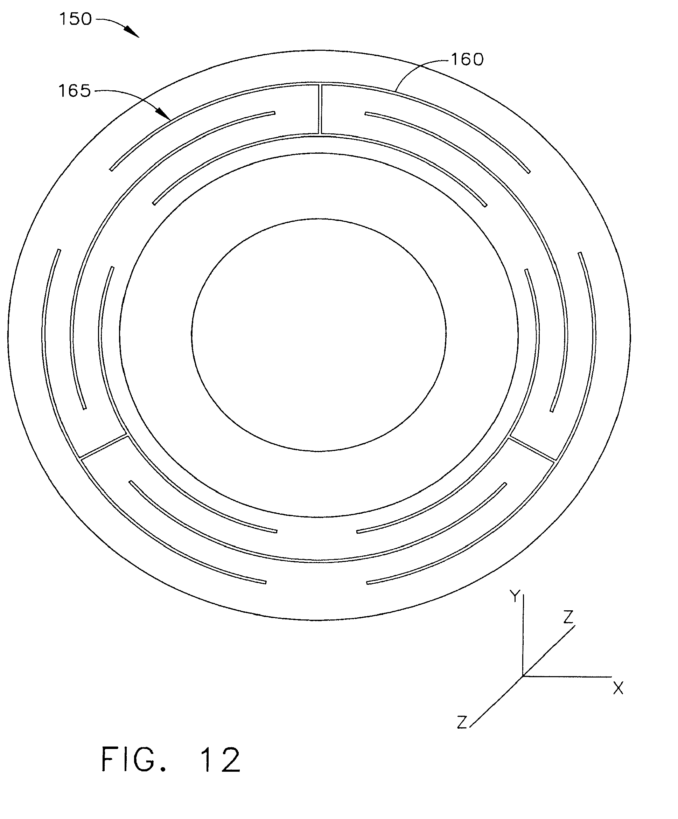

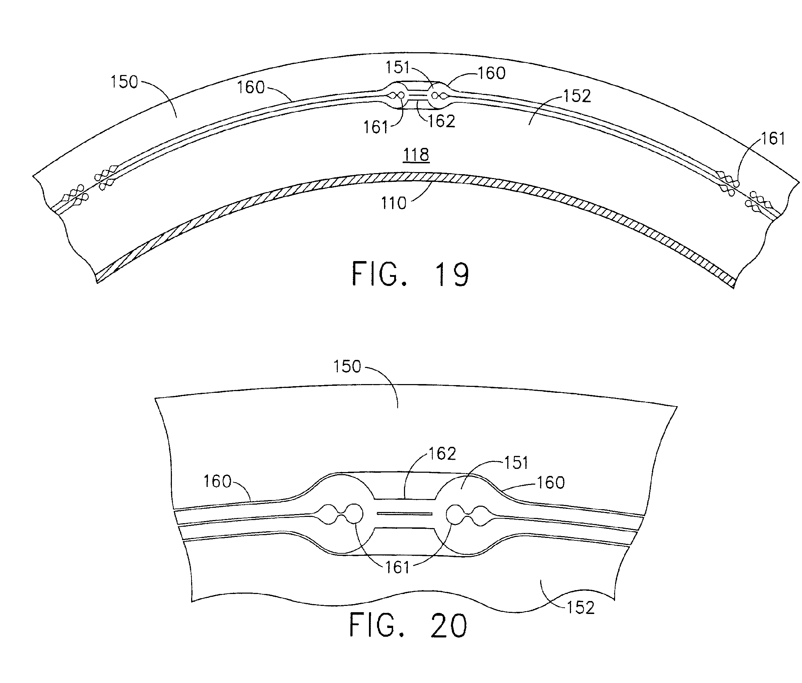

As shown in Figure 6, the flexure member includes three seam segments 160, however any number of seams in may be provided. The beam count may be altered to achieve desired deflection at seal face 124, as shown in Figure 4. In the present embodiment, each of the seams comprises two arcuate segments 190, 191 that are joined by a non-arcuate segment 192. The non-arcuate portion is oriented radially. As shown in Figure 6, for a single seam, one of the arcuate segments of each adjacent seam in the clockwise and counterclockwise directions relative to the single seam, is located in parallel to the arcuate segments of the single seam, and are separated by a radial distance approximately equal to the length of the radial segment 192. The flexure member 150 may be configured to be an annular member as shown in Figure 6 with central opening 183 that receives the moveable stator member 110. Additionally the flexure member may have any suitable seam arrangement. Alternative designs for the seams are illustrated in Figures 7 and 12. The suitable seam arrangement may include adjacent beams being connected together. This connection may be at their proximate ends, such as the connecting segment 162 depicted in Figures 19 and 20. Connecting adjacent beams may provide various advantages, depending upon material and construction details as well as the operating environment. One potential advantage would be to increase the vibration frequency of the beams, such as to move their vibration frequency out of the range expected to be encountered in normal and/or foreseeable engine operating conditions.

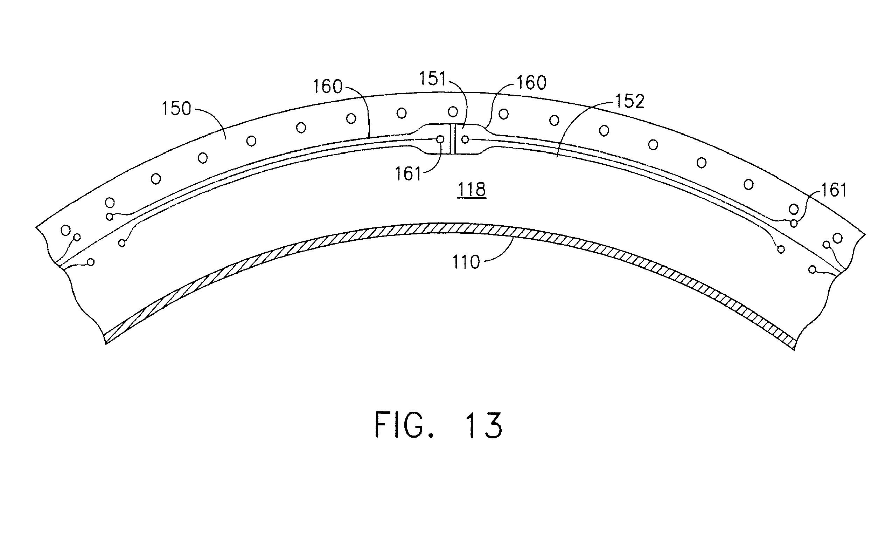

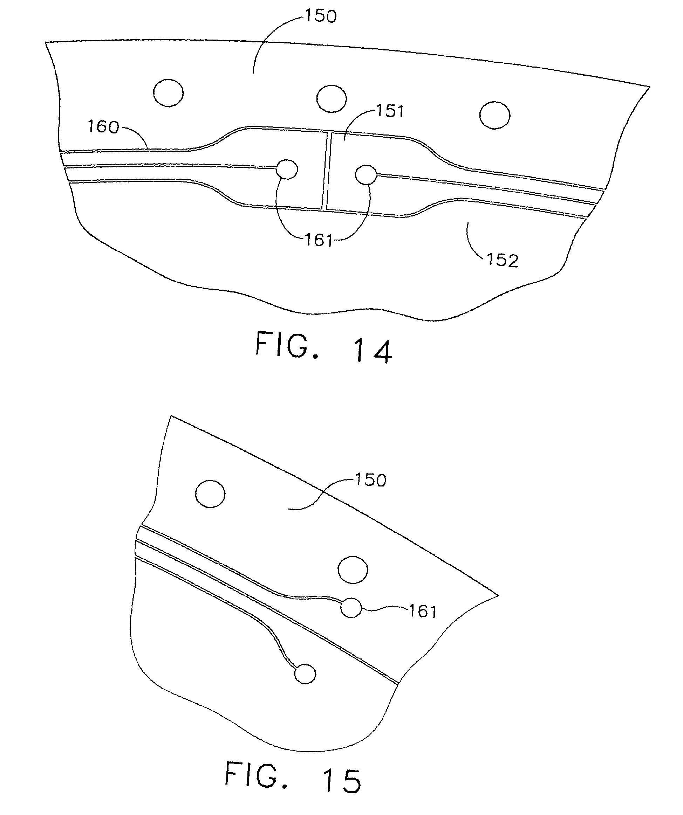

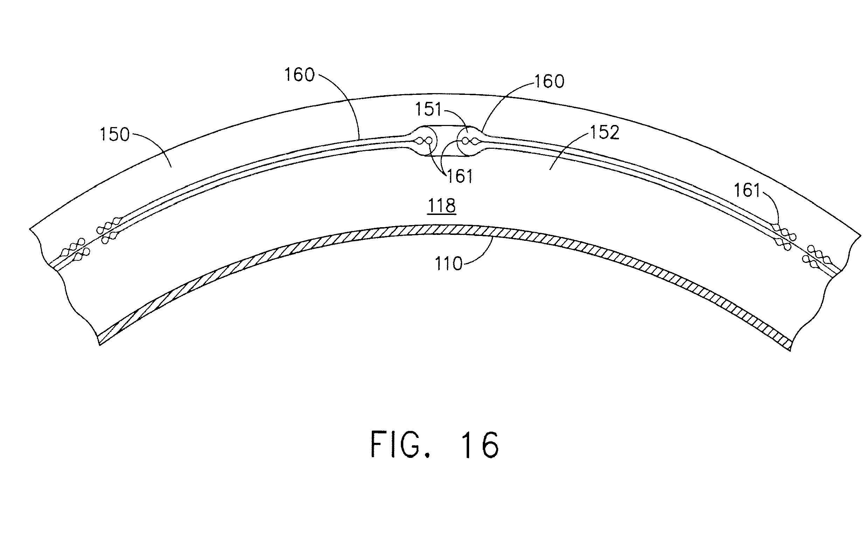

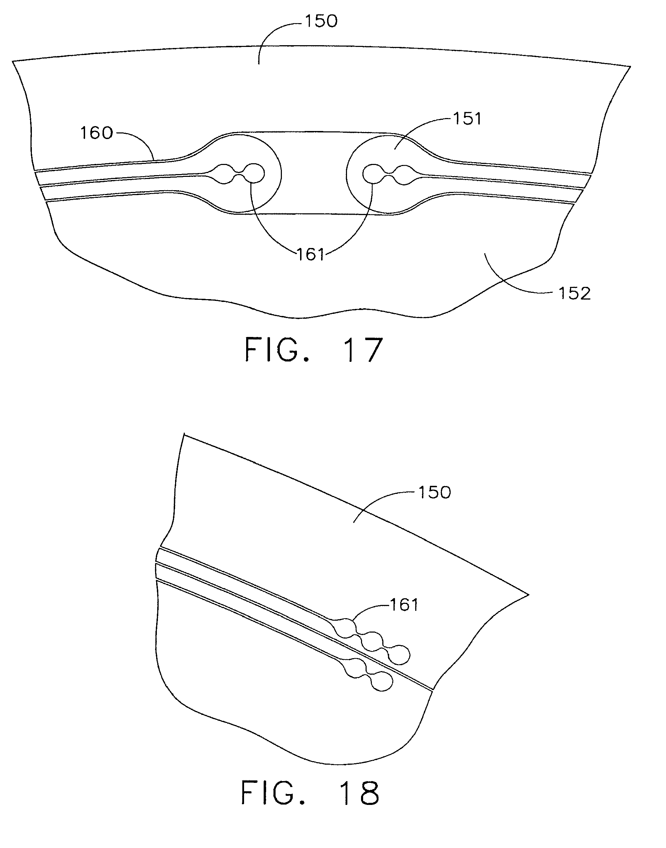

The seams 160 are openings within each flexure member 150 that have been cut therein into a pattern determined beforehand as suitable to enable the flexure member 150 to flex and therefore bias as required. A suitable method for cutting the seams 160 into the flexure member 150 is by electro discharge machining which process is well known by persons of skill in the art. It is noted herein, though, that the methodology for cutting the seams 160 into the flexure member 150 forms no part of the invention herein. In another embodiment herein, a flexure member 150 may be cast such that the seams 160 are a by-product of the casting process; i.e., cast such that the openings are part of the process. Additionally, stress relief holes 161 may be added at the ends of the cut-out portions of the seams 160, for example, as shown in Figures 13-18.

Figure 7 provides a cut-out of a portion of an alternate configuration of the flexure member 150 of Figure 6. In particular, a portion of a seam 160 is shown enlarged. Herein, each darkened line of the seam 160 represents an opening through the flexure member 150. Figure 6 illustrates a possible configuration of a flexure member 150(spring). Taking a sheet of material and cutting the indicated slots in it allows a small force to displace the center of the sheet (feature 152 of Figure 2) out of plane from the periphery of the sheet (feature 150 of Figure 2). Figure 7 shows an alternative configuration of these cuts. An infinite number of possible configurations are possible, of which the ones shown in Figures 6, 7, and 12 are shown as examples.

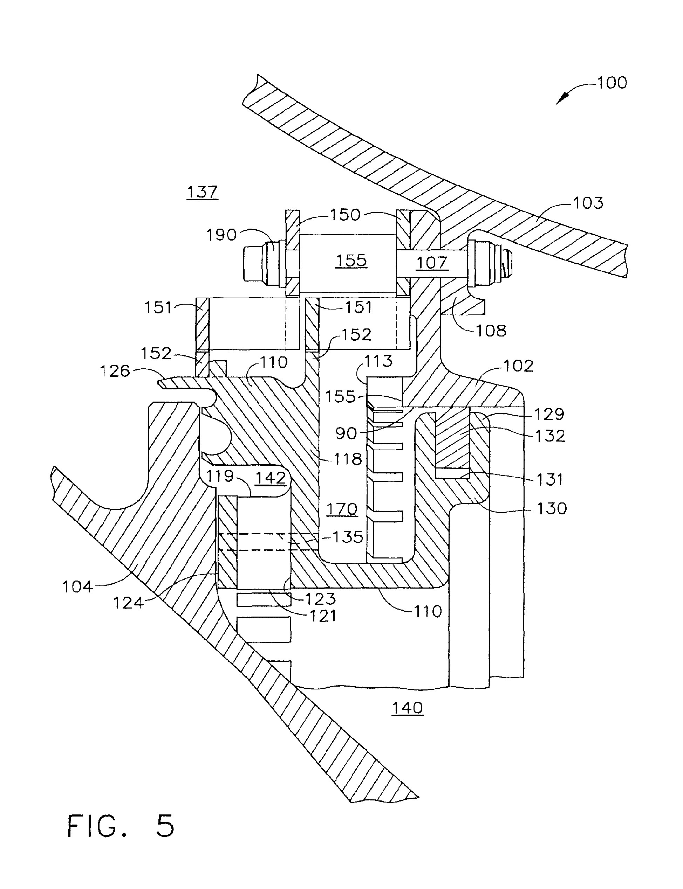

Figures 4 and 5 show an alternate embodiment seal assembly 100 of the present invention. Figure 4 shows the movable stator in a first non-sealing position and Figure 5 shows the movable stator in a second, sealing position. The seal 100 includes flexure members 150 located at opposite ends of an elongate fastener 107. The flexure members are separated by spacer 155 that is slidably located on the fastener 107. In this alternate configuration, flexure members 150 are positioned in a parallel orientation and are held apart by a spacer 155. Spacer 155 is a useful but not required device between the two flexure members 150.

The flexure members 150 always act to open the seal (moving the movable stator member 110 to the position shown in Figure 4). Air pressures during engine operation overcome the spring forces of the flexure members 150 to move the moveable stator member 110 to the closed position (Figure 5).

As shown in Figures 4 and 5, two flexible members 151 are coupled between ends 150 and 152 as described in conjunction with the description of seal assembly 100. Both members 151 extend when the movable stator is displaced in direction 200 to a sealing position. Additionally, seal 132 is in sealing contact with surface 90 of fixed stator base 102.

During operation, cooling air and/or fluids flow through gas turbine engine 10. When engine 10 is in operation, high pressure air flows toward the aft engine end 29. A portion of the highly compressed air discharged from high pressure compressor 14 is directed towards seal assembly 100 for use as cooling fluid. Seal assembly 100 facilitates substantially controlling fluid flow from a region of higher pressure 137 to a region of lower pressure 140 within gas turbine engine 10. The pressure differential between higher pressure region 137 and lower pressure region 140 initiates flow through seal assembly 100. The pressures acting on the moveable stator member 110 are such that the pressure forces overcome the spring force of the flexure member 151, and the moveable stator member 110 will translate from the first position (shown in Figures 2 and 4) to the second, sealing position (Figures 3 and 5).

Additionally, during operation, a portion of the high pressure air flows through openings 135. In the exemplary embodiment, opening 135 is a plurality of feed openings. Openings 135 form a high pressure film or air bearing between surfaces 124 and rotating member surface 125. The air bearing prevents moveable stator member 110 from contacting rotating member 104.

After air flows through opening 135, the air exits to the region of lower pressure 140. Also, a portion of air may leak past seal teeth 126, 127, 128. Air that leaks past seal teeth 126, 127, 128 and that portion of the air that has exited opening 135 and flows radially outward, flows through radial openings 134 to the region of lower pressure 140.

While the invention has been described in terms of various specific embodiments, those skilled in the art will recognize that the invention can be practiced with modification within the spirit and scope of the claims.

## Claims

1. A seal assembly (100) comprising:
a first movable stator member (110) movable between a sealing position and a non-sealing position, a second fixed stator member (102), the first stator member (110) being movable relative to the second stator member (102), the seal assembly (100) further comprising at least one flexure member (150) coupled to the second stator member (102), and at least one biasing member (151) coupled between the at least one flexure member (150) and the movable stator (110) for biasing the movable stator (110) to a non-sealing position.

2. The seal assembly (100) of Claim 1, having at least two flexure members (150) and two biasing members (151), each biasing member (151) coupled to a flexure member (150).

3. The seal assembly (100) as claimed in Claim 1 or Claim 2, the second stator (102) comprising a base (112) and a surface (114) along the base (112), the first stator (110) comprising a sealing member (124) that sealingly engages the contact surface (118) of said base (112).

4. The seal assembly (100) of any one of the preceding Claims, wherein the first stator (110) comprises a yoke (130), said member (110) being located in said yoke (130).

5. The seal assembly (100) as claimed in any one of the preceding Claims, wherein the flexure member (150) is supported on a fastener member (107).

6. The seal assembly (100) of any one of the preceding Claims, wherein said flexure member (150) includes at least one seam (160) which permits said flexure member (150) to flex out of plane.

7. The seal assembly (100) of Claim 6, wherein said seam (160) comprises an opening through said flexure member (150).

8. The seal assembly (100) of Claim 7, wherein said flexure member (150) includes a plurality of seams (160), said seams (160) defining at least one beam therebetween, said beam being connected to another beam at their proximate ends (152,157).

9. The seal assembly (100) of Claim 8, wherein said flexure member (150) includes at least one stress relief hole (161) at the end of a seam (160).
